(19) **Europäisches Patentamt / European Patent Office / Office européen des brevets**

(11) **EP 2 262 055 A1**

(12) **EUROPEAN PATENT APPLICATION**

(43) Date of publication:
**15.12.2010 Bulletin 2010/50**

(51) Int Cl.:
**H01Q 1/24** *(2006.01)*    **H01Q 9/16** *(2006.01)*

(21) Application number: **10165321.0**

(22) Date of filing: **09.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **12.06.2009 KR 20090052130**

(71) Applicant: **SAMSUNG ELECTRONICS CO., LTD.**
**Suwon-si,**
**Gyeonggi-do (KR)**

(72) Inventors:
- **Lee, Kyung-Jong**
  **Suwon-si, Gyeonggi-do (KR)**
- **Lee, Jae-Ho**
  **Suwon-si, Gyeonggi-do (KR)**

- **Jang, Byung-Chan**
  **Suwon-si, Gyeonggi-do (KR)**
- **Hwang, In-Jin**
  **Suwon-si, Gyeonggi-do (KR)**
- **Kim, Seung-Hwan**
  **Suwon-si, Gyeonggi-do (KR)**
- **Choi, Weon-Jai**
  **Suwon-si, Gyeonggi-do (KR)**
- **Sa, Kong-Min**
  **Suwon-si, Gyeonggi-do (KR)**
- **Sung, Sang-Bong**
  **Suwon-si, Gyeonggi-do (KR)**

(74) Representative: **Ketelaars, Maarten F.J.M.**
**Nederlandsch Octrooibureau**
**J.W. Frisolaan 13**
**2517 JS  Den Haag (NL)**

(54) **Built-in antenna for folder type portable terminal**

(57)    A built-in antenna for a folder type portable terminal includes a main body including a main board, an openable folder rotated at a predetermined angle with respect to the main body, a metallic hinge module rotating the folder on the main body to provide an opening and closing feeling of the folder, a conductor electrically connected to the metallic hinge module, the conductor being disposed inside the folder, and at least one conductive connection unit electrically connected to a broadcasting signal line of the main board, the at least one conductive connection unit being electrically connected to the hinge module through a non-contact coupling.

FIG.2

Printed by Jouve, 75001 PARIS (FR)

EP 2 262 055 A1

**Description**

Background of the Invention

1. Field of the Invention

The present invention relates generally to a folder type portable terminal, and in particular, to a folder type portable terminal having a built-in antenna capable of receiving a broadcasting signal of a low frequency band using only a built-in antenna without the need of an external antenna.

2. Description of the Related Art

Generally, portable terminals may be classified according to an opening and closing operation of a sub-body. Various types of terminals such as a bar type terminal, a flip type terminal, a folder type terminal, a slide type terminal, a pop-up type terminal, and a slide and rotation type terminal are available to meet the preferences of various consumers. For example, a speaker that realizes melodies having various harmonizing voices, MP3 player, and a color display device having millions of pixel may be installed in the terminals. In addition, digital broadcasting services such as game contents, digital multi-media broadcasting (DMB), digital video broadcasting-handheld (DVB-H), integrated services digital broadcasting-terrestrial ((ISDB-T) using the display device may be provided to the terminal.

When the digital broadcasting is received, a separate broadcasting antenna for receiving and transmitting external signals is used. For example, the DBM is operated at a frequency of about 180 MHz to about 210 MHz, and the DVB-H or the ISDB-T is operated at a frequency of about 470 MHz to about 862 MHz. Thus, to receive broadcasting signals operated in a low frequency band, a relatively large antenna must be used.

In particular, a detachable antenna has been provided to a terminal buyer to receive the DVB-H or the ISDB-T. However, since the conventional terminal including the detachable antenna causes portable inconvenience and worry of loss, a retractable antenna which is disposed inside the terminal is available for receiving the broadcasting signals. The retractable antenna includes a helical antenna fixed to the terminal or a whip antenna disposed inside a general bushing to protrude by a predetermined length.

However, since the retractable antenna occupies a space for installing the antenna within the terminal, it is drawbacks when making the terminal slimmer. Also, since the whip antenna protrudes from the terminal, the whip antenna may be damaged during the usage.

Summary of the Invention

An exemplary aspect of the present invention is to substantially solve at least the above problems and/or disadvantages and to provide at least the advantages below. Accordingly, an object of the present invention is to provide a built-in antenna for a folder type portable terminal capable of receiving broadcasting signals without providing a separate antenna installed inside thereof.

Another exemplary aspect of the present invention is to provide a built-in antenna for a folder type portable terminal, in which an antenna installation space is minimized to realize a slimmer terminal.

Another exemplary aspect of the present invention is to provide a built-in antenna for a folder type portable terminal, which prevents a malfunction of the terminal due to damage of the antenna.

Another exemplary aspect of the present invention is to provide a built-in antenna for a folder type portable terminal, in which a separate broadcasting antenna is not required because the entire terminal serves as an antenna radiator.

In accordance with an exemplary aspect of the present invention, a built-in antenna for a folder type portable terminal includes: a main body including a main board; an openable folder rotated at a predetermined angle with respect to the main body; a metallic hinge module rotating the folder on the main body to provide an opening and closing sensation of the folder; a conductor electrically connected to the metallic hinge module, the conductor being disposed inside the folder; and at least one conductive connection unit electrically connected to a broadcasting signal line of the main board, wherein one conductive connection unit is electrically coupled to the hinge module through a non-contact coupling.

Brief Description of the Drawings

The above features and advantages of the present invention will become more apparent from the following detailed description when taken in conjunction with the accompanying drawings in which:

FIG. 1 is a perspective view of a folder type portable terminal to which a built-in antenna is applied according to an embodiment of the present invention;

FIG. 2 is a schematic view of a state in which a built-in antenna is installed according to an embodiment of the present invention;

FIG. 3 is a schematic view illustrating an install state of a built-in antenna according to an embodiment of the present invention;

FIG. 4 is a schematic view illustrating an installation relationship of a built-in antenna according to another embodiment of the present invention; and

FIG. 5 is a schematic view for explaining the capacitance calculation of a dielectric between two metal plates according to an embodiment of the present invention.

Detailed Description

The following description, with reference to the accompanying drawings, is provided to assist in a comprehensive understanding of certain exemplary embodiments of the invention provided herein for illustrative purposes. The description includes various specific details to assist a person of ordinary skill the art with understanding the claimed invention, but these details are to be regarded as merely exemplary. Accordingly, those of ordinary skill in the art will recognize that various changes and modifications of the illustrative examples described herein can be made without departing from the spirit of the invention and the scope of the appended claims. Also, descriptions of well-known functions and constructions may be omitted for clarity and conciseness when their inclusion may obscure appreciation of the subject matter of the claimed invention by a person or ordinary skill in the art.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural references unless the context clearly dictates otherwise. Thus, for example, a reference to "a component surface" includes reference to one or more of such surfaces.

By the term "substantially" it is typically meant that the recited characteristic, parameter, or value need not be achieved exactly, but that deviations or variations, including but in no way limited to, for example, tolerances, measurement error, measurement accuracy limitations and other factors known to persons of ordinary skill in the art, may occur in amounts that do not preclude the effect the characteristic was intended to provide.

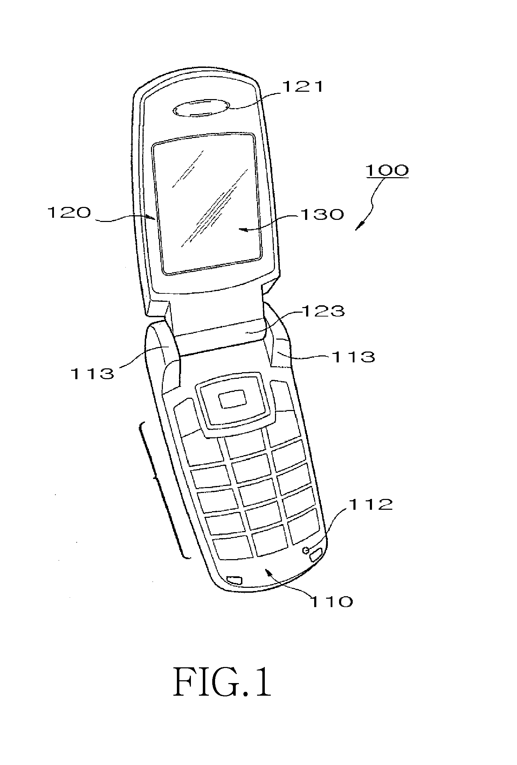

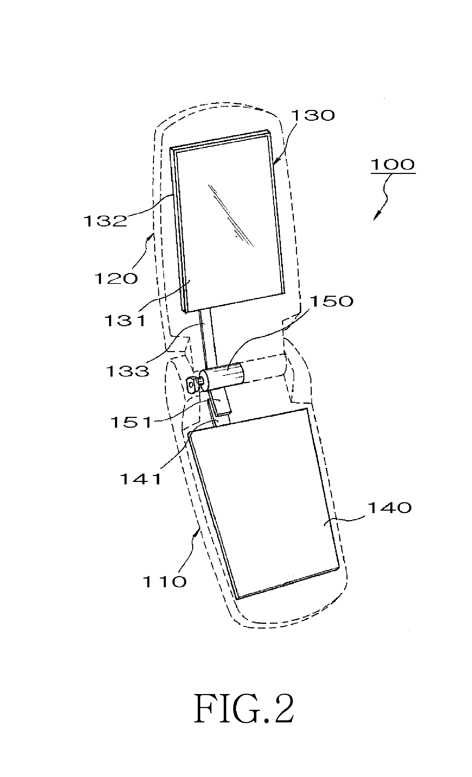

FIG. 1 is a perspective view of a folder type portable terminal to which a built-in antenna is applied according to an embodiment of the present invention, and FIG. 2 is a schematic view of a state in which a built-in antenna is installed according to an embodiment of the present invention.

Referring to FIGS. 1 and 2, a folder type portable terminal 100 includes a main body 110 and a folder 120 capable of being opened and closed at a predetermined angle with respect to the main body 110. A plurality of key button assemblies 111 is disposed on the main body 110. For example, a $3 \times 4$ keypad assembly and a navigation keypad assembly may be disposed on the main body 110. A microphone 112 is disposed below the key pad assemblies 111. A display device 130 having a predetermined size may be disposed on the folder 120. A speaker 121 is disposed above the display device 130.

The folder 120 is rotatably folded on to the main body 110. A center hinge arm 123 is disposed on the folder 120. Side hinge arms 113 facing each other are disposed on both lateral surfaces of the main body 110. Also, a predetermined hinge module (see reference numeral 150 of FIG. 2) is received into the center hinge arm 123. The hinge module 150 is partially fixed to the side hinge arms 113 and communicates with the side hinge arms 113 to provide an opening and closing feeling of the folder 120 to a user. Also, the hinge module 150 induces a change of direction in an opening and closing direction of the folder 120 at a certain time point during an operation of the folder 120. However, the present invention is not limited thereto. If the center hinge arm 123 on which the hinge module 150 is disposed is disposed on the main body 110, the corresponding side hinge arms 113 may be disposed on the folder 120.

However, to apply the broadcasting antenna according to the present invention, the hinge module 150 may be disposed on the above-described center hinge arm 123. The center hinge arm 123 and the side hinge arms 113 may be formed of a synthetic resin material, and the hinge module 150 may be formed of a metal material.

Referring to FIG. 2, in the broadcasting antenna according to the present invention, in particular, DVB-H or ISDB-T antenna, the entire terminal serves as one large dipole antenna radiator. Furthermore, the hinge module 150 may be connected to a feedline of a broadcasting signal line constituting the main board 140. Also, a conductor included in the folder 120 may be used as an antenna radiator. A ground of the main board 140 may serve as a ground structure.

A reinforcement plate 132, which serves as a conductor of the folder 120 and is a metal plate for protecting an LCD panel 131 of an LCD module 130, may be electrically connected to the metallic hinge module 150 by a conductive member 133. Various well-known conductors such as a flexible printed circuit (FPC), a metal plate, and a metal tape may be used as the conductive member 133.

The main board 140 includes a first conductive connection unit 151 electrically connected to the hinge module 150 and a second conductive connection unit 141 having one end spaced a predetermined distance from the first conductive connection unit 151 and the other end electrically connected the signal line of the main board 140. Although the first conductive connection unit 151 and the second conductive connection unit 141 are spaced from each other, a space in which the first conductive connection unit 151 overlaps with the second conductive connection unit 141 by a predetermined width may serve as a dielectric to perform an electrical connection operation. The first and second conductive connection units 151 and 141 may be formed of conductive materials, respectively.

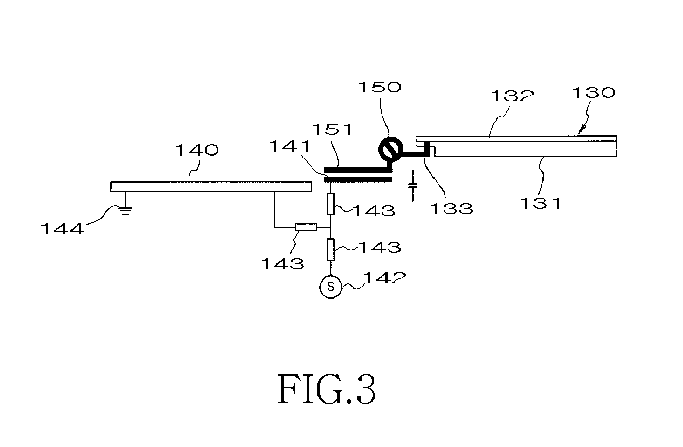

FIG. 3 is a schematic view illustrating an install state of a built-in antenna according to an embodiment of the present invention and relates to FIG. 2.

Referring to FIG. 3, the metallic hinge module 150 is built in the center hinge arm 123 of the folder 120. The hinge module 150 is electrically connected to the metallic reinforcement plate 132 of the LCD module 130 by the predetermined conductive member 133.

Also, the first conductive connection unit 151 has one end electrically connected to the hinge module 150 and the other end withdrawn toward the inside of the main body 110 by a predetermined length. Here, the first conductive connection unit 151 may be a plate type connection unit having a predetermined area.

The second conductive connection unit 141 has one end that overlaps with the first conductive connection unit 151, but does not contact the first conductive connection unit 151 and the other end electrically connected to the broadcasting signal line 142 of the main board 140. The second conductive connection unit 141 may be also a plate type connection unit having a predetermined area. Portions of the first and second conductive connection units 151 and 141, which overlap with each other, may have the same area. Thus, the hinge module 150 and the reinforcement plate 132 for the LCD module may be connected to the signal line 142 of the main board 140 and simultaneously connected to the ground. At least one matching circuit may be disposed on the signal line 142 to aid the formation of a desired antenna pattern.

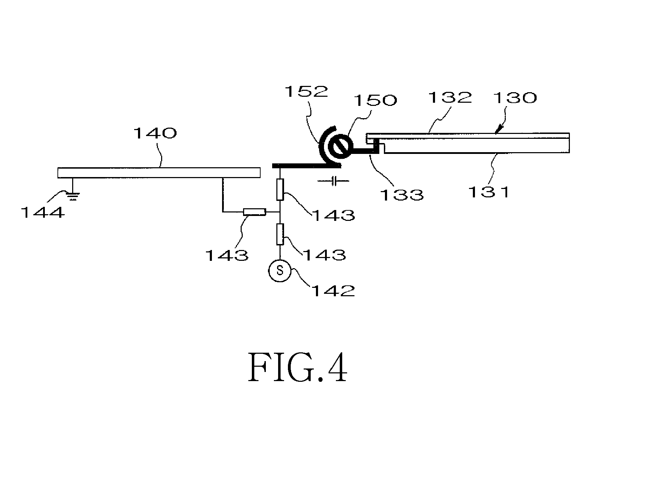

FIG. 4 is a schematic view illustrating an installation relationship of a built-in antenna according to another embodiment of the present invention. The built-in antenna of FIG. 4 has the same component as that of FIG. 3 except that the first conductive connection unit 151 is formed as one connection unit. The one connection unit is called a third connection unit 152.

The third connection unit 152 has one end connected to the signal line 142 of the main board 140 and the other end having the same configuration as that of the hinge module 150 and disposed close to an outer circumference of the hinge module 150. The third connection unit 152 may be also a plate type connection unit. The first, second, and third connection units 151, 141, and 152 may be disposed on the main body 110 through various methods. For example, a metal plate having a predetermined area may be attached to an inner surface of a frame of the main board 140 or insert-molded when the frame is injected.

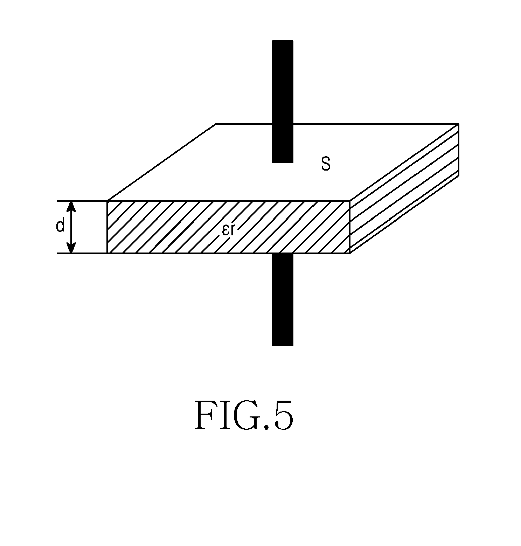

FIG. 5 is a schematic view for illustrating the capacitance calculation of a dielectric between two metal plates according to an embodiment of the present invention. The electrical connection between the first conductive connection unit and the second conductive connection unit or the electrical connection between the hinge module and the third connection unit may be described with reference to FIG. 3 and calculated using Equation 1.

$$C = \varepsilon \frac{S}{d}$$

where C is a capacitance between the plates, S is a area of the respective plates, and d is a distance between the plates. Here, $\varepsilon = \varepsilon_r \times \varepsilon_0$ ($\varepsilon_r$: relative permittivity, $\varepsilon_0 = 8.854 \times 10^{-12}$).

That is, a desired capacitance C may be calculated considering that capacitance C is in inverse proportion to the distance d between the plates and in proportion to the area S of the respective plates.

For example, in case where the connection units are built in the case frame of the main board using the insert-molding, when a polycarbonate material ($\varepsilon_r = 3$) that is a general material of the case frame of the terminal has a desired capacitance C of about 5 pF (impedance $\doteqdot$ 0 at a baseband of about 2.4 GHz) and a thickness d of about 1 mm, 5 pF is equal to $[3 \times 80854 \times 10^{-12}) \times S]/1mm$ by Equation 1. Thus, when the area S of the respective plates is about 0.1888 $mm^2$ and has a general square shape, an area of about 1.3 cm $\times$ 1.3 cm is required.

That is, a terminal manufacturer may calculate and selectively apply the desired capacitance in consideration of the first, second, and third connection units. Also, according to the above-described components, since the main board and the folder, which are relatively and frequently rotated with respect to each other, are electrically connected to each other in a non-contact state, a malfunction of the terminal due to the disconnection may be prevented even though the terminal is operated for a long time.

Following Table 1 shows peak sensitivities of the built-in antenna according to the first and second embodiments of the present invention and an existing retractable external antenna.

[Table 1] PEAK sensitivity [dBm. CO-Polarization]

| | 13 Ch. | 21 Ch. | 27 Ch. | 40 Ch. | 53 Ch. |
|---|---|---|---|---|---|
| An embodiment | -46 | -50 | -51 | -53 | -51 |
| Another embodiment | -44 | -51 | -52 | -50 | -50 |
| Existing external antenna | -48 | -53 | -54 | -52 | -51 |
| Radiated performance measurement over an actual available frequency band (13 Ch.: 473 MHz/ 53 Ch.: 713 MHz) | | | | | |

Here, radiated performance was measured over a range of from 13 Ch (473 MHz) to 53 Ch (713 MHz) that is an actual available frequency band. It is observed that the built-in broadcasting antenna according to the present invention has performance similar to that of an existing external antenna.

Since the built-in antenna according to the present invention maximally uses existing components, a separate space in which the antenna radiator is mounted as in the prior art is not needed. Thus, the terminal may be far slimmer when the teachings of present invention is applied.

While the invention has been shown and described with reference to certain preferred embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the present invention. Various modifications may be made thereto without departing from the spirit of the following claims.

**Claims**

1.   A built-in antenna for a folder type portable terminal, comprising:

   an openable folder rotated at a predetermined angle with respect to a main body;
   a metallic hinge module rotatably coupled to the folder to provide an opening and closing sensation of the folder with respect to the main body;
   a conductor electrically connected to the metallic hinge module, the conductor being disposed inside the folder; and
   at least one conductive connection unit electrically connected to a broadcasting signal line of a main board of the main body, the at least one conductive connection unit being electrically coupled to the hinge module through a non-contact coupling.

2.   The built-in antenna of claim 1, wherein the conductor comprises a metallic reinforcement plate disposed on a back surface of an LCD panel of the folder to protect the LCD panel.

3.   The built-in antenna of claim 2, wherein a conductive member having one end electrically connected to the conductor and the other end electrically connected to the hinge module, and is further disposed between the conductor and the hinge module,
   wherein the conductive member is formed of one of a flexible printed circuit, a metal plate, a metal bracket, a metal tape, and a conductive spray or their combination.

4.   The built-in antenna of claim 1, wherein the at least one conductive connection unit comprises:

   a first conductive connection unit having one end electrically connected to the hinge module and the other end extending toward the main board; and
   a second conductive connection unit having one end non-contacting the first conductive connection unit and having a surface facing the first conductive connection unit and the other end electrically connected to the broadcasting signal line of the main board.

5. The built-in antenna of claim 4, wherein area of facing surfaces of the first conductive connection unit and the second conductive connection unit is substantially the same.

6. The built-in antenna of claim 5, wherein at least one matching circuit is disposed between the second conductive connection unit and the signal line.

7. The built-in antenna of claim 6, wherein the first and second conductive connection units comprise plate-type metal plate, respectively.

8. The built-in antenna of claim 7, wherein the first and second conductive connection units are insert-molded into a case frame of the main body.

9. The built-in antenna of claim 8, wherein the second conductive connection unit is connected to a ground of the main board and used as a dipole antenna along with the conductor.

10. The built-in antenna of claim 9, wherein the antenna comprises a DVB-H or an ISDB-T antenna.

11. The built-in antenna of claim 1, wherein the conductive connection unit comprises a metal plate having one end disposed close to an outer circumference of the hinge module and the other end electrically connected to the broadcasting signal line of the main board.

12. The built-in antenna of claim 11, wherein at least one matching circuit is disposed between the metal plate and the signal line.

13. The built-in antenna of claim 12, wherein the metal plate is insert-molded into a case frame of the main body.

14. The built-in antenna of claim 13, wherein the metal plate is connected to a ground of the main board and serves as a dipole antenna along with the conductor.

15. The built-in antenna of claim 14, wherein the antenna comprises a DVB-H or an ISDB-T antenna.

FIG.1

FIG.2

FIG.3

FIG.4

FIG.5

Europäisches
Patentamt

European
Patent Office

Office européen
des brevets

# EUROPEAN SEARCH REPORT

Application Number

EP 10 16 5321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 538 694 A1 (MATSUSHITA ELECTRIC IND CO LTD [JP] PANASONIC CORP [JP]) 8 June 2005 (2005-06-08) * the whole document * ----- | 1-15 | INV. H01Q1/24 H01Q9/16 |
| X | EP 1 739 785 A1 (MATSUSHITA ELECTRIC IND CO LTD [JP]) 3 January 2007 (2007-01-03) * the whole document * ----- | 1-15 | |
| A | EP 1 724 938 A1 (SONY ERICSSON MOBILE COMM AB [SE]) 22 November 2006 (2006-11-22) * the whole document * ----- | 1-15 | |
| A | EP 1 962 372 A1 (BENQ MOBILE GMBH & CO OHG [DE]) 27 August 2008 (2008-08-27) * the whole document * ----- | 1-15 | |

TECHNICAL FIELDS
SEARCHED     (IPC)

H01Q

The present search report has been drawn up for all claims

| Place of search | Date of completion of the search | Examiner |
|---|---|---|
| The Hague | 18 August 2010 | Moumen, Abderrahim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&: member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 10 16 5321

This annex lists the patent family members relating to the patent documents cited in  the above-mentioned European search report.
The members are as contained in the European Patent Office EDP file on
The European Patent Office is in no way liable for these particulars which are merely given for the purpose of information.

18-08-2010

| Patent document cited in search report | | Publication date | Patent family member(s) | | Publication date |
|---|---|---|---|---|---|
| EP 1538694 | A1 | 08-06-2005 | AU | 2003281595 A1 | 09-02-2004 |
| | | | CN | 1682405 A | 12-10-2005 |
| | | | EP | 2053689 A1 | 29-04-2009 |
| | | | EP | 2187475 A1 | 19-05-2010 |
| | | | WO | 2004010530 A1 | 29-01-2004 |
| EP 1739785 | A1 | 03-01-2007 | CN | 1957504 A | 02-05-2007 |
| | | | WO | 2006046712 A1 | 04-05-2006 |
| | | | US | 2007164913 A1 | 19-07-2007 |
| EP 1724938 | A1 | 22-11-2006 | NONE | | |
| EP 1962372 | A1 | 27-08-2008 | NONE | | |

EPO FORM P0459

For more details about this annex : see Official Journal of the European Patent Office, No. 12/82